# EUROPEAN PATENT SPECIFICATION

(11) **EP 2 332 833 B1**
(45) Date of publication and mention of the grant of the patent: **19.04.2017**
(21) Application number: 10192997.4
(22) Date of filing: 29.11.2010
(51) Int. Cl.: B64D 11/00

(54) **Lockable cable-actuated latching mechanism**
Blockierbarer durch Kabel betätigter Verriegelungsmechanismus
Mécanisme de verrouillage actionné par câble verrouillable

(30) Priority: 11.12.2009 US 635837
(43) Date of publication of application: 15.06.2011
(73) Proprietor: The Boeing Company, Chicago, IL 60606-1596 (US)
(72) Inventor: Lin, Dennis Carl, Shoreline, WA 98133 (US); Kneller, Heidi Joy, Bellevue, WA 98008 (US); Claflin, Shawn A., Seattle, WA 98103 (US); Cloud, Mark L., Seattle, WA 98112 (US)
(74) Representative: Howson, Richard G.B.

(56) References cited:
- DE-A1- 4 335 151
- US-A1- 2006 214 055
- US-A1- 2007 200 366

## Description

### Background

Conventional overhead stowage bins on commercial aircraft include shelf-style bins and pivoting bucket-style bins. The shelf-style bins include a static storage shelf that is enclosed and secured by a bin door that rotates downward and secures into place. Pivoting bucket-style bins are mounted in place on an axle, pivoting downwards around the axle to expose an interior storage space and upwards around the axle to conceal the interior storage space. Each type of stowage bin includes handle and latch mechanisms that either secure the bin door in place over the contents of a shelf-style bin, or that secure a pivoting bucket-style bin upwards in the stowed configuration.

The handle assembly of a typical pivoting bucket-style bin includes an exterior handle that is rotated by a user to disengage the latch mechanisms and open the bin. The exterior handle is part of the handle assembly, which is mounted to an inside surface of the bin near the opening to the bin, centered between opposing latch mechanisms mounted to opposing sides of the bin. The opposing latch mechanisms and the handle assembly are linearly aligned along a single axis. A torque tube member extends from each side of the handle assembly to mechanically connect the exterior handle to the latch mechanisms. Rotation of the exterior handle rotates each torque tube member, which in turn rotates and disengages the latch mechanisms on opposing sides of the bin.

Utilizing torque tubes to transfer the rotational motion of the exterior handle to the latch mechanisms creates limitations thaw have conventionally been accepted as a trade-off to the effective design. First, the torque tubes, require that the handle assembly and the latch mechanisms on opposing sides of the bin be mounted so that they are linearly aligned along a single axis, as described above. Because the exterior handle needs to be placed in a convenient location on the exterior surface of the bin that is accessible to passengers of varying heights, and because the torque tubes require that the latch mechanisms be axially aligned with the handle assembly, the latch mechanisms are limited as to the position at which they are located, which may not be at a mechanically advantageous location.

Additionally, because the handle assembly and corresponding latch mechanisms cannot be positioned flush with an external edge of the bin opening, the torque tubes and their cover must occupy valuable space within the interior of the stowage bin, limiting the valuable space utilized by carry-on luggage and other supplies. Further, even when manufactured to minimize weight, the torque tubes and corresponding safety covers add weight to an aircraft, which results in undesirable effects with respect to fuel efficiency and other design factors.

In addition to actuation inefficiencies, conventional overhead aircraft stowage bins cannot be locked by a flight crew without utilizing a keyed locking mechanism. A keyed locking mechanism operates differently from a traditional 1 handle and latching mechanism. As a result, keyed bins must be specially ordered and installed. Reconfiguring overhead bins to add, remove, or swap locking mechanisms between keyed and un-keyed units is cumbersome. Further, utilizing a keyed locking mechanism requires that the flight crew maintain a key, which can be easily misplaced.

It is with respect to these considerations and others that the disclosure made herein is presented.

### Summary

It should be appreciated that this Summary is provided to introduce a selection of concepts in a simplified form that are further described below in the Detailed Description. This Summary is not intended to be used to limit the scope of the claimed subject matter.

Concepts and technologies described herein provide for a lockable, cable-actuated coupling mechanism that provides for latching and releasing an aircraft stowage bin, or any other similar stowage bin or compartment, in a manner that maximizes the available internal storage volume of the bin while minimizing weight. According to one aspect of the disclosure provided herein, a cable-actuated coupling mechanism includes a handle assembly, a latch assembly, and a cable connecting the two. The handle assembly includes an exterior handle actuated by the user and used to release the bin and an attached handle assembly. The handle assembly includes a pivoting arm that is attached to and rotates with the actuation of the exterior handle. One end of the cable is connected to the pivoting arm and the other end of the cable is connected to a release mechanism of the latch assembly. Upon rotation of the exterior handle, the pivoting arm pulls the cable, which in turn pulls the release mechanism of the latch assembly to release the bin from the stowed position.

According to another aspect, a method for securing an aircraft stowage bin includes assembling a handle assembly to rotate a pivoting arm with the rotation of an exterior handle. The handle assembly is installed in the inside of the aircraft stowage bin, with the exterior handle accessible from outside of the stowage bin. A latch assembly is installed on an exterior surface of the bin. A cable is attached to the pivoting arm at one end to a release mechanism of the latch assembly at the other end, and routed through a number of cable guides that are installed near an edge of the aircraft stowage bin so as to maximize the volume of the usable interior space of the stowage bin and to reduce the size and weight of the assembly's protective cover.

According to yet another aspect of the disclosure, a lockable cable-actuated coupling system for latching and releasing an aircraft stowage bin includes a handle assembly, a pair of latch assemblies positioned on opposing sides of the bin, and a pair of cables connecting the handle assembly to the pair of latch assemblies. The handle assembly includes a pair of pivoting arms that are connected to an exterior handle. Upon rotation of the exterior handle, the pivoting arms rotate and pull the cables to release the latch assemblies, releasing the aircraft stowage bin for loading and unloading. The coupling system additionally includes a locking mechanism configured to disengage the pivoting arms from the exterior handle so that rotation of the exterior handle does not rotate the pair of pivoting arms and therefore does not release the stowage bin to an open position.

The features, functions, and advantages that have been discussed can be achieved independently in various embodiments of the present disclosure or may be combined in yet other embodiments, further details of which can be seen with reference to the following description and drawings.

US 2007/0200366, which is considered to be the closest prior art, relates to a latch assembly including a bezel disposed within a panel and a handle having a center portion, a first grip portion, and a second grip portion. The center portion is disposed between the first grip portion and the second grip portion. The center portion pivotally mounts the handle within the bezel.

The present invention is set out in the independent claims, with some optional features set out in the claims dependent thereto.

### Brief Description Of The Figures

FIG. 1 is a perspective view of a prior art stowage bin latching system;
FIG. 2 is a perspective view of a cable-actuated coupling system installed within a stowage bin according to various embodiments presented herein;
FIG. 3 is rear perspective view of an aircraft stowage bin with an installed lockable cable-actuated coupling system according to various embodiments presented herein;
FIG. 4A is a top view of a locking mechanism for a cable-actuated coupling system showing an unlocked configuration according to various embodiments presented herein;
FIG. 4B is a top view of a locking mechanism for a cable-actuated coupling system showing a locked configuration according to various embodiments presented herein;
FIG. 5A is a top view of a locking mechanism for a cable-actuated coupling system with lock activation knob removed, showing slidable pins in the unlocked configuration according to various embodiments presented herein;
FIG. 5B is a top view of a locking mechanism for a cable-actuated coupling system with lock activation knob removed, showing slidable pins in the locked configuration according to various embodiments presented herein;
FIG. 6 is a bottom perspective view of a pair of slidable pins for a locking mechanism of a cable-actuated coupling system according to various embodiments presented herein;
FIG. 7 is a top view of a locking mechanism for a cable-actuated coupling system with lock activation knob and slidable pins removed, showing springs within the pin grooves according to various embodiments presented herein;
FIG. 8 is a bottom view of a lock activation knob of a locking mechanism for a cable-actuated coupling system according to various embodiments presented herein;
FIG. 9 is a side view of a pivoting arm and axle of a locking mechanism for a cable-actuated coupling system, showing spring-assisted coupling between the pivoting arm and end of the axle according to various embodiments presented herein;
FIG. 10 is a rear perspective view of a pivoting arm and axle of a locking mechanism for a cable-actuated coupling system, showing a recessed portion of the pivoting arm and corresponding engagement portion of the axle according to various embodiments presented herein; and
FIG. 11 is a flow diagram showing a method for securing an aircraft stowage bin according to various embodiments presented herein.

### Detailed Description

The following detailed description is directed to systems and methods for securing a stowage bin. Although the disclosure provided herein discusses various embodiments of a cable-actuated latching mechanism in the context of use with aircraft overhead stowage bins, and specifically with pivoting, bucket-style bins, it should be understood that the various embodiments may be utilized with any type of bin, container, lid, compartment, or door. For example, the cable-actuated latching and releasing mechanisms described below may be installed on a bin door, closet door, and/or drawer, and may be used in an aircraft environment, in conjunction with any other type of vehicle, or with even with any type of static container or object.

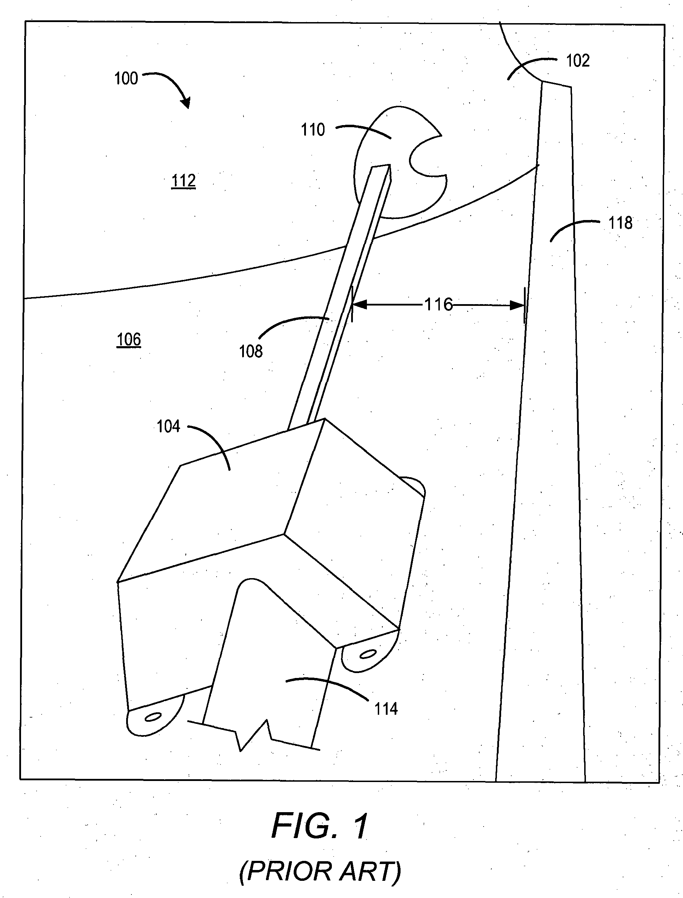

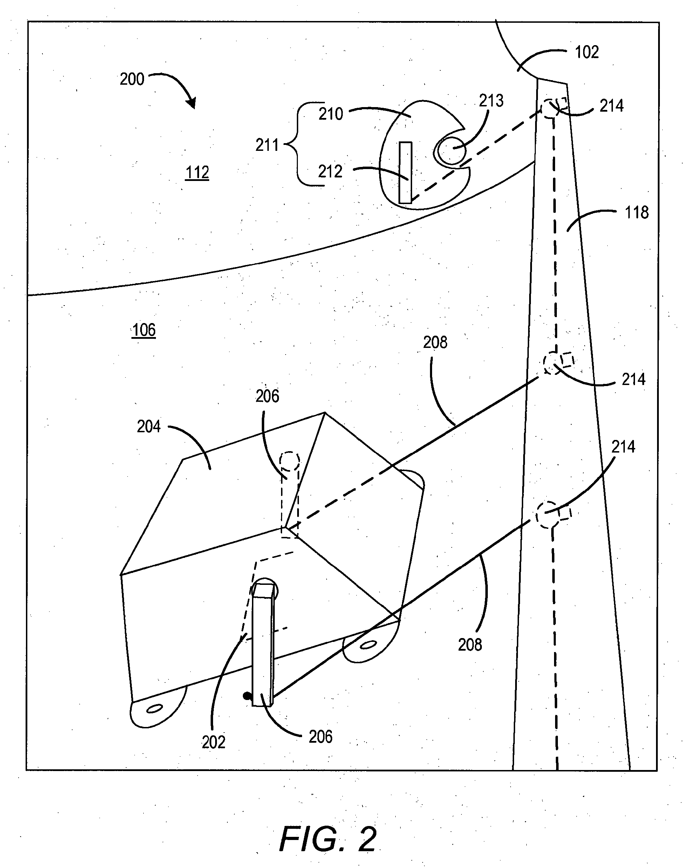

As discussed above, conventional bucket-style aircraft overhead bins utilize a pair of torque tubes extending from the latch mechanism in the center of an interior surface of the bin to two latch mechanisms on opposing sides of the bin. This conventional latching configuration will be described below with respect to FIG. 1 to provide an illustrative contrast to the embodiments shown and discussed with respect to FIG. 2 through FIG. 11. As will become clear from the illustration and discussion of the conventional latching system, the torque tubes and corresponding protective covers occupy valuable storage space that could be utilized for passenger or crew belongings. In addition, these torque tubes and protective covers, given the number of overhead stowage bins in any particular aircraft, add up to a significant amount of weight as they must be robust enough to handle repeated abuse from heavy carry-on luggage.

Utilizing the concepts and technologies described herein, the conventional torque tubes used to transfer the rotational motion of the external handle of an overhead aircraft bin to the latching mechanisms of the bin are replaced with cables attached to pivoting arms and latch release mechanisms. Tension applied to the cables from the rotation of the external handle operates to release the latch mechanisms and open the bin.

In the following detailed description, references are made to the accompanying drawings that form a part hereof, and which are shown by way of illustration, specific embodiments, or examples. Like numerals represent like elements through the several figures. Referring now to FIG. 1, a conventional latching system 100 for securing and releasing an aircraft stowage bin 102 will be described. The conventional latching system 100 includes a conventional handle assembly 104 mounted to an interior surface 106 of the aircraft stowage bin 102. The conventional handle assembly 104 includes an exterior handle (not shown) that is accessible from a front side of the interior surface 106.

The exterior handle is connected to two torque tubes 108 on opposing sides of the conventional handle assembly 104 such that rotational motion from the exterior handle is transferred to the torque tubes 108 to rotate the torque tubes 108 with the handle. Opposing ends of the torque tubes 108 are connected to respective conventional latch assemblies 110 installed in a side wall 112 of the aircraft stowage bin 102. Only one conventional latch assembly 110 is shown, however, it should be understood that a corresponding torque tube 108 extends coaxially from the torque tube 108 shown to an opposite side wall 112 to which a second conventional latch assembly 110 is installed. Accordingly, whenever the exterior handle is rotated, the torque tubes 108 rotate the corresponding conventional latch assemblies 110 on the side walls 112 of the aircraft stowage bin 102 to release the conventional latch assemblies 110 and open the bin.

As previously mentioned, the torque tubes 108 are covered by a protective cover 114 to protect the torque tubes 108 and the conventional handle assembly 104 from damage from contact with carry-on luggage or other items stowed in the aircraft stowage bin 102. It should be appreciated that only the portion of the protective cover 114 that covers one torque tube 108 is shown for clarity, but in practice, a single cover protects both torque tubes 108 and the conventional handle assembly 104 between the two torque tubes. Similar to the torque tubes 108 themselves, the protective cover 114 is typically manufactured from a metal or suitably hard material sufficient to protect the torque tubes 108 and conventional handle assembly 104 from repeated impacts with luggage and other items tossed into the aircraft stowage bin 102. Consequently, the protective cover 114, along with the corresponding torque tubes 108, add a significant amount of undesirable weight to the aircraft as well as decrease the useable space of the bin interior, as described below.

As seen in FIG. 1, the conventional latching system 100 creates an unusable space 116 between the protective cover 114 and the front edge 118 of the aircraft stowage bin 102. Alternatively, the protective cover 114 may extend from the torque tubes 108 all the way to the front edge 118 of the aircraft stowage bin 102. In either scenario, the unusable space 116 exists and prevents most luggage and carry-on bags from utilizing the entire space from the back of the aircraft stowage bin 102 to the front edge 118 of the bin. As space for carry-on items is extremely limited when aircraft are filled to near capacity, any unusable space 116 within a stowage bin is undesirable. It can be appreciated from the configuration of the conventional latching system 100 illustrated in FIG. 1 that to operate properly, the conventional latch assemblies 110, torque tubes 108, and conventional handle assembly 104 must be linearly aligned along a common axis through the length of the torque tubes 108. This requirement does not allow for the conventional latch assemblies to be located in any other position on or within the aircraft stowage bin 102 that may provide a mechanical advantage over the coaxial positioning.

Turning now to FIG. 2, a cable-actuated coupling system 200 will be described according to various embodiments described herein. The cable-actuated coupling system 200 is installed within the aircraft stowage bin 102 to secure and release the bin, while maximizing the usable interior storage space of the bin and minimizing the weight of the system as compared to the conventional latching system 100 described above. The cable-actuated coupling system 200 includes a handle assembly 204 mounted to an interior surface 106 of the aircraft stowage bin 102. The handle assembly 204 includes an exterior handle 202 that is accessible from a front side of the interior surface 106.

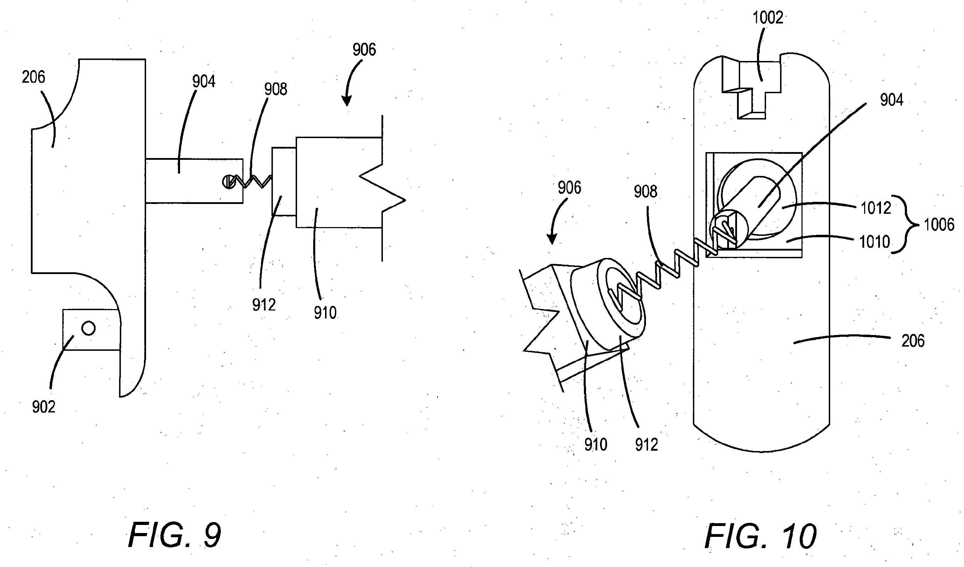

The exterior handle 202 is connected to two pivoting arms 206 via one or more axles. The axles are shown and described in further detail below with respect to FIGS. 9 and 10. The pivoting arms 206 are each connected to a latch assembly 211 via a cable 208. The latch assembly 211 may include a latch 210 and a release mechanism 212. The latch 210 is configured to engage and disengage a conventional fixed latch mechanism 213 that is statically mounted to a structure. The latch 210 and conventional fixed latch mechanism 213 operate together in a similar manner as a conventional latch assembly 110 to secure an aircraft stowage bin 102.

For example, the latch 210 may include a spring-loaded pawl that allows a pin or other fixed latch mechanism 213 to enter the latch 210 when the latch 210 and spring-loaded pawl are forced against the pin, but prevents the pin from exiting the latch 210 until the spring-loaded pawl is retracted or rotated out of the way. Retraction of the spring-loaded pawl is activated via the release mechanism 212. According to various embodiments, the release mechanism 212 may include a bar or rod of metal, plastic, or other rigid material of sufficient length to allow tension applied to the cable 208 attached to one end of the release mechanism 212 to rotate the pawl attached to the opposing end of the release mechanism to allow the fixed latch mechanism 213 to disengage from the latch 210.

The pivoting arms 206 are sized and configured such that rotation of the exterior handle rotates the pivoting arms 206 rearward toward the rear of the aircraft stowage bin 102 to apply tension to and pull the cables 208 that are attached to the pivoting arms 206. It should be appreciated that the length of each cable 208 that is pulled upon a full rotation of the exterior handle 202 may be determined according to the design of the cable-actuated coupling system 200. Factors in determining the cable pull length may include, but may not be limited to, the length of the pivoting arms 206, the length of release mechanisms 212 of the latches 210 described below, and the angle of rotation of the pivoting arms 206. It should also be appreciated that while the pivoting arms 206 are shown and described as rotating toward the rear of the aircraft stowage bin 102 upon rotation of the exterior handle 202, the pivoting arms 206 could be designed to rotate forwards toward the opening of the aircraft stowage bin 102 if the routing of the cables 208 were adjusted to allow for tension to be applied to the cables 208 with the forward rotation of the pivoting arms 206.

Preferably, the cables 208 should be manufactured from abrasion resistant material that is substantially inelastic, corrosion resistant, non-kinking, with very low creep characteristics. The material for the cables 208 is to be robust and could be fire resistant. One suitable example of a potentially suitable material for the cables 208 is braided stainless steel. Another example of a potentially suitable material for the cables 208 is Spectra® 900/1000/2000 fiber supplied by Applied Fiber of Havana, FL. Spectra® is a registered trademark of Honeywell International, Inc. of Morristown, NJ.

It should be noted that maintaining the desired tension of the cables 208 over time may be accomplished by using a cable material that does not stretch, or by using a self-tightening system that ensures proper tension. As an example of a self-tightening system, a length of spring could be inserted in each run of cable 208 so that the spring operates to take up any slack in the cable due to stretching. These springs would also simplify the application of a desired tension when installing the cable-activated coupling system 200. As described above, the cables 208 may be routed in areas of the aircraft stowage bin 102, internally and/or externally, that are least likely to be utilized for the storage of luggage and other items, effectively eliminating the unusable space 116 created by the conventional latching system 100 described and illustrated above with respect to FIG. 1.

The cables 208 are routed throughout the aircraft stowage bin 102 using the cable guides 214. The cable guides 214 may include any structures that are secured to the inside and/or outside of the aircraft stowage bin 102 that are used to turn the cables 208. The cable guides 214 may be static guides, such as projections from a surface of the aircraft stowage bin 102 around which a cable 208 turns, or dynamic guides, such as pulleys that provide the means for turning the cables 208 while minimizing frictional wear as the cables 208 move back and forth as the external handle 202 is pulled and released. While the cables 208 are shown as being routed from the handle assembly 204, forward to the front edge 118 of the aircraft stowage bin 102, outwards toward the side walls 112 of the aircraft stowage bin 102, and finally rearward to the latch assemblies 211, it should be appreciated that the locations of the cable guides 214 and the corresponding path of the cables 208 may be positioned at any locations with respect to the aircraft stowage bin 102 depending on the preferred locations of the latch assemblies 211 with respect to the handle assembly 204.

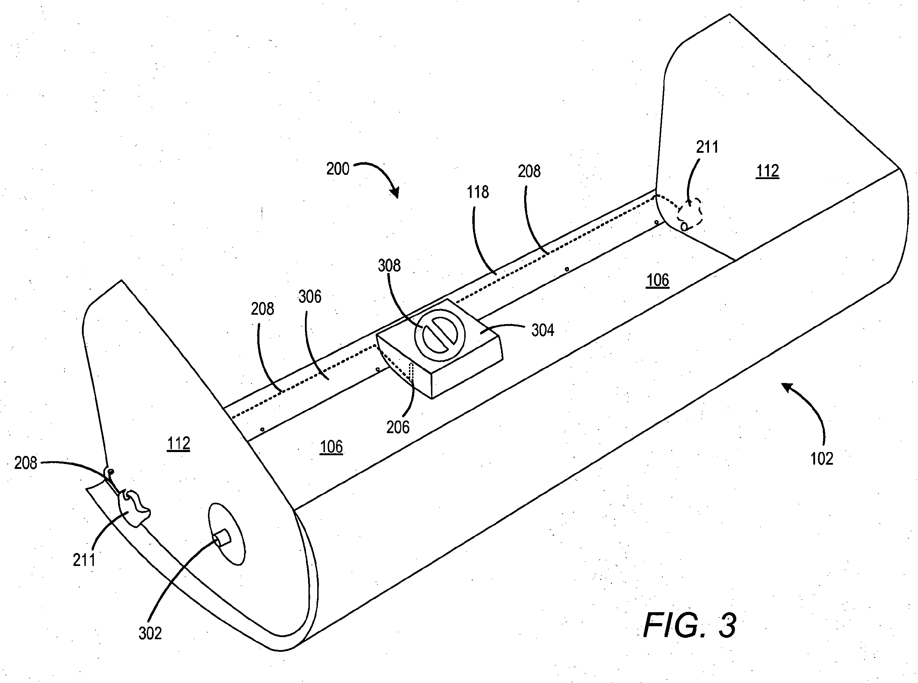

As mentioned above, it-may be mechanically advantageous to position one or more latch assemblies 211 as far as possible, radially from the pivoting location of the aircraft stowage bin 102, rather than in axial alignment with the handle assembly 204. Locating the latch assemblies 211 towards the front edge 118 of the aircraft stowage bin 102 will reduce the loads carried by the latch assemblies 211 because of the increased lever arms. Reducing the loads carried by the latch assemblies 211 enables the use of smaller, and consequently lighter, latch assemblies 211, which further reduces the weight of the cable-actuated coupling system 200 and of the aircraft as a whole. Utilizing the cable-actuated coupling system 200, the latch assemblies 211 may be positioned at any preferred position on any surface of the aircraft stowage bin 102. It should be understood that embodiments described herein are not limited to the configurations and positioning of the various components of the cable-actuated coupling system 200 shown in FIG. 2 and FIG. 3. Rather, FIG. 2 and FIG. 3 are used to provide a visual comparison with the conventional latching system 100 shown in FIG. 1, illustrating the available use of the previously unusable space 116 when replacing the conventional torque tubes 108 with the cables 208 and related components.

FIG. 3 shows a rear perspective view of the aircraft stowage bin 102 with the cable-actuated coupling system 200 installed. The aircraft stowage bin 102 pivots around two bin axles 302 on opposing side walls 112. With this view, both of the latch assemblies 211 and corresponding cables 208 can be seen. The handle assembly 204 is covered by a handle assembly cover 304 to protect the pivoting arms 206, attached cables 208, and other handle assembly components from damage. Similarly, the front edge 118 of the aircraft stowage bin 102 includes one or more cable covers 306 to conceal and protect the cables 208 that are routed along the front edge 118. These cable covers 306 provide an additional benefit of adding longitudinal stiffness to the bin bucket. It should be appreciated that the handle assembly cover 304 and the cable covers 306 may be a single cover or may include any number of covers connected together or independently to the surface of the aircraft stowage bin 102. A conventional aircraft stowage bin 102 may include a bullnose trim piece that spans the front edge 118. It should be appreciated that the handle assembly cover 304 and/or the cable covers 306 may be integrated into the bullnose trim piece or may be separate components to be utilized with the bullnose trim piece.

The embodiment of the cable-actuated coupling system 200 shown in FIG. 3 includes a locking mechanism 308 that enables the flight crew to lock the aircraft stowage bin 102 without the use of a key. There are often situations in which the crew of an aircraft would like to store personal or professional items within an aircraft stowage bin 102 and would like the ability to lock the bin to prevent passengers from gaining access to the bin and the items within. Traditionally, airlines have the option of purchasing and configuring their aircraft with any number of lockable bins that utilize conventional keyed locks to selectively provide and prevent access to the contents within. However, keyed bins have a number of shortcomings.

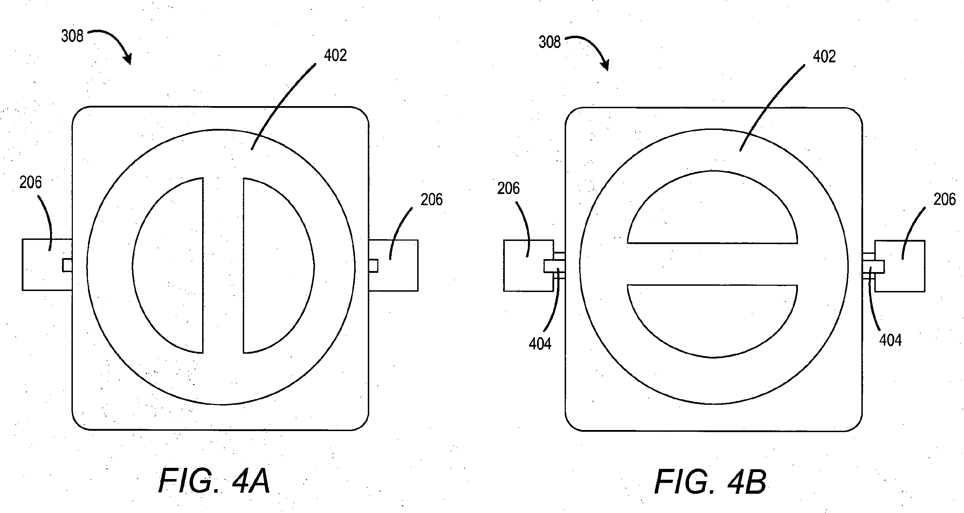

First, keyed bins are separate from conventional non-lockable bins and must be ordered, purchased, and installed separately, which creates certain additional administrative and financial considerations. Secondly, keyed bins require that the flight crews maintain keys. Keys can be easily misplaced, and can be mistakenly broken off into locks or otherwise damaged. Utilizing the concepts described herein with respect to FIG. 4A through FIG. 10, the cable-actuated coupling systems 200 of aircraft stowage bins 102 may include locking mechanisms 308 built into the handle assemblies 204. As will be described below, the locking mechanisms 308 provide flight crews with a keyless method of quickly and easily locking an aircraft stowage bin 102.

Turning now to FIG. 4A and FIG. 4B, a top view of the locking mechanism 308 is shown. Using the locking mechanism 308, a member of the flight crew can manually lock the aircraft stowage bin 102 without the use of a key, and then close the bin. Once closed, the exterior handle 202 is inoperative to open the bin so that the contents of the bin become inaccessible to passengers. To open the locked aircraft stowage bin 102, existing manual releases on the outside of the bin at each latch assembly 211 can be actuated to allow the bin to open. When opened, the locking mechanism 308 can be reset to an unlocked position and the aircraft stowage bin 102 may return to normal operation until the locking mechanism 308 is again used to secure the bin.

FIG. 4A shows the locking mechanism 308 in an unlocked configuration in which the external handle 202 operates as described above to rotate the pivoting arms 206, apply tension to the cables 208, and activate the release mechanisms 212 to open the aircraft stowage bin 102. In operation, the locking mechanism 308 selectively engages and disengages the pivoting arms 206 from the axle that connects the arms to the external handle 202. When the pivoting arms 206 are disengaged from the axle, any rotation of the external handle 202 does not translate into the pivoting arms 206. Without rearward rotation of the pivoting arms 206, tension is not applied to the cables 208 and the release mechanism 212 of the latch assemblies 211 are not actuated. The locking mechanism 308 includes a lock activation mechanism 402 that operates to activate and deactivate the locking mechanism 308. According to the embodiment shown and described with respect to FIG. 4A through FIG. 8, the lock activation mechanism 402 is a lock activation knob that is configured to lock and unlock the aircraft stowage bin 102 via 90-degree rotation of the lock activation knob.

FIG. 4B shows the locking mechanism 308 in a locked configuration in which the pivoting arms 206 are disengaged from the axle, preventing tension from being applied to the cables 208 with rotation of the external handle 202. As seen in this illustration, the lock activation knob, or lock activation mechanism 402, has been rotated 90 degrees from the unlocked configuration. Generally, rotation of the lock activation knob pushes a pair of slidable pins 404 within the locking mechanism 308 outward until they contact the pivoting arms 206 and push the pivoting arms 206 outward to disengage the axle. An additional 90-degree rotation of the lock activation knob returns the slidable pins 404 to an inward position, allowing the pivoting arms 206 to slide inward until they once again engage the axle. These operations and corresponding components of the locking mechanism 308 will now be described in greater detail.

It should be understood that according to various embodiments, the axle is configured to be self-centering and the pivoting arms 206 are configured to return to the "home" position upon release of the external handle 202, the home position being substantially vertical or in the otherwise designed position that applies minimal or no tension on the cables 208. For example, springs (not shown) may be installed around the axle to bias the pivoting arms 206 in the home position. In doing so, it is ensured that the slidable pins 404 are properly aligned with the pivoting arms 206 to actuate the locking mechanism 308 as described below.

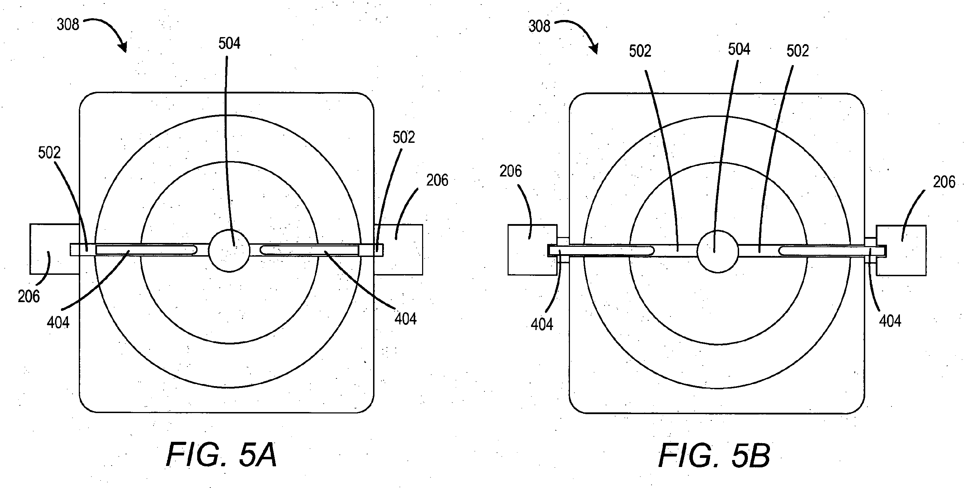

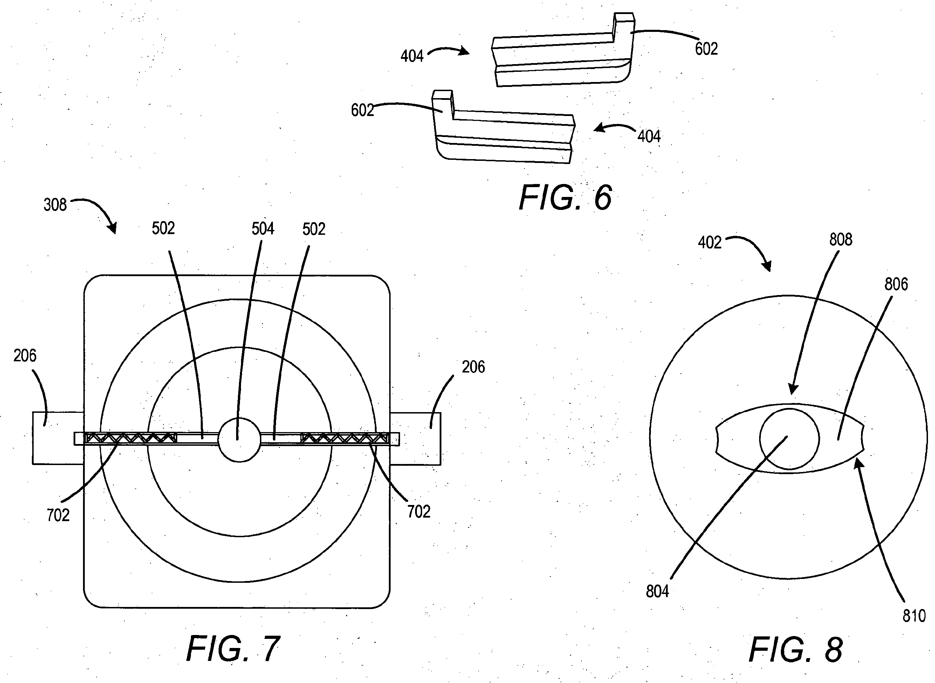

FIG. 5A and FIG. 5B show the locking mechanism 308 in unlocked and locked configurations, respectively, with the lock activation knob removed to allow for visualization of the slidable pins 404 and corresponding structure. The locking mechanism 308 includes two pin slots 502 that are axially aligned on opposing sides of a center hub 504. As will be described below with respect to FIG. 8, the center hub 504 corresponds to a similar structure on a bottom side of the lock activation knob to assist in securing the lock activation knob in place and guiding the rotation of the lock activation knob to engage and disengage the locking mechanism 308. The pin slots 502 extend from the center hub 504 into the pivoting arms 206. As can be seen in FIG. 5A and FIG. 5B, the length of each pin slot 502 is greater than the length of a slidable pin 404 that will rest within the pin slot 502. When the lock activation knob is rotated, the slidable pins 404 are pushed outward in the pin slots 502 against the pivoting arms 206 until the pivoting arms 206 are pushed outward far enough to disengage the axle.

Looking at FIG. 6 and FIG. 7, the slidable pins 404 and the associated structure of the locking mechanism 308 will be described. FIG. 6 shows bottom perspective views of the slidable pins 404. According to one embodiment, each of the slidable pins 404 has a pin projection 602 at the inboard end of the pin that points downward into the pin slot 502 when installed in the locking mechanism 308. As seen in FIG. 7, each of the pin slots 502 has a spring 702 disposed within the slot. The pin slots 502 are deep enough to accommodate the springs 702 at the bottom of the slots and the upper portion of the slidable pins 404 on top of the springs 702. The pin projections 602 of the slidable pins 404 fit within gaps between the center hub 504 and the inboard ends of the springs 702.

When the slidable pins 404 are forced outwards by the lock activation knob, the pin projections 602 compress the springs 702, biasing the slidable pins 404 toward the center hub 504 such that when the force is removed from the slidable pins 404, the springs 702 force the slidable pins 404 inward to allow for the engagement of the pivoting arms 206 with the axle. It should be appreciated that the specific configuration of the slidable pins 404 and corresponding pin slots 502 and springs 702 is not limited to the illustrated embodiments. Rather, any structure that allows for the pivoting arms 206 to be selectively forced outward and returned inward falls within the scope of this disclosure. The pin slots 502 may have multiple depths with multiple slot widths at various depths to accommodate different portions of the slidable pins 404. The springs 702 may freely rest within the slots 502, or the outboard ends of the springs 702 may be secured within the pin slots 502.

FIG. 8 shows a bottom view of the lock activation knob, or lock activation mechanism 402. The lock activation knob includes a hub recess 804 that receives the center hub 504. The lock activation knob additionally includes a lock activation projection 806 that has a narrow portion 808 and an elongated portion 810. The lock activation projection 806 is configured to push the slidable pins 404 outward to disengage the pivoting arms 206 from the axle upon a rotation of the lock activation knob to a position in which the elongated portion 810 is in contact with the slidable pins 404. Conversely, the lock activation projection 806 is configured to allow the slidable pins 404 to return to an inboard position with the assistance of the springs 702, allowing the pivoting arms 206 to re-engage the axle, upon a rotation of the lock activation knob to a position in which the narrow portion 808 is in contact with the slidable pins 404.

It should be understood that while the lock activation mechanism 402 is described in the context of a lock activation knob, any mechanical component that effectuates the outward and inward translation of the pivoting arms 206 could be utilized within the scope of this disclosure. For example, one or more mechanical switches or levers may be utilized to manually push the slidable pins 404 and pivoting arms 206 outward to a disengage position and to return them inward to an engaged position. According to further embodiments, manual or computer-controlled electrical switches and actuators may be used to electro-mechanically move the pivoting arms 206. According to these embodiments, the flight crew may control one or more aircraft stowage bin 102 locking mechanisms 308 via a push button switch on each bin, or via a central control panel electrically connected to each lockable aircraft stowage bin 102.

FIG. 9 and FIG. 10. illustrate further details with respect to a pivoting arm 206, an axle 906, and aspects of the connection and engagement between the two components, according to one embodiment. Although for clarity, only one pivoting arm 206 will be illustrated and discussed, it should be appreciated that embodiments provided herein may utilize one pivoting arm 206 per latch assembly 211 within the cable-actuated coupling system 200. Alternatively, multiple cables 208, each leading to a separate latch assembly 211 could be connected to a single pivoting arm 206, should the rotational force applied to the pivoting arm 206 from the external handle 202 be sufficient to actuate multiple release mechanisms 212.

Looking at FIG. 9, the pivoting arm 206 may include a cable connection 902 to which a cable 208 is attached. Further, the pivoting arm 206 includes an arm shaft 904 that is sized and shaped for insertion into the hollow axle 906. A spring 908 may be attached at one end to the arm shaft 904 and at the opposing end to a location within the axle 906. Alternatively, the opposing end of the spring 908 may be attached to an arm shaft 904 of a second pivoting arm 206 that is connected to the opposing end of the axle 906. It should be understood that in the configuration shown in FIG. 4A through FIG. 7, there may be a single axle 906 to which both pivoting arms 206 are attached, or each pivoting arm 206 may be separately attached to a different axle 906.

Referring again to FIG. 9 and FIG. 10, the outer end of the axle 906 includes an engagement portion 910 having a non-circular cross-section, and an end portion 912 having a circular cross-section. In this embodiment, the engagement portion 910 of the axle 906 has a substantially square cross-section. However, the engagement portion 910 could have any non-circular shape. FIG. 10 shows a rear side of the pivoting arm 206. The pivoting arm 206 optionally includes a pin recess 1002 shaped to receive a slidable pin 404. The pivoting arm 206 additionally includes an axle recess 1006 surrounding the arm shaft 904 that is shaped and sized to complimentarily mate with the outer end of the axle 906. The axle recess 1006 includes an engagement recess 1010 that is configured to receive the engagement portion of the axle 906. The deepest portion of the axle recess 1006 is the circular recess 1012 that has a circular cross-section configured to receive the end portion 912 of the axle 906.

With this configuration, when the locking mechanism 308 is unlocked, the pivoting arms 206 are engaging the axle 906 with the outer ends of the axle 906 being seated within the axle recesses 1006 of the pivoting arms 206. The non-circular cross-sectional shape of the engagement portions 910 of the axle 906 and corresponding engagement recesses 1010 of the pivoting arms 206 provides for the rotation of the pivoting arms 206 with the rotation of the axle 906, which pulls the cables 208 and releases the latch assemblies 211.

When the lock activation knob of the locking mechanism 308 is rotated to lock the aircraft stowage bin 102, the elongated portion 810 of the lock activation projection 806 pushes the slidable pins 404 outward. The slidable pins 404 then push the pivoting arms 206 outward until the engagement portions 910 of the axle 906 release from the engagement recesses 1010 of the pivoting arms 206. With the engagement portions 910 and engagement recesses 1010 no longer mated, the end portions 912 of the axle 906 are free to rotate within the engagement recesses 1010 of the pivoting arms 206 due to the circular cross-sectional shapes of the end portions 912. Consequently, subsequent rotation of the external handle 202 and axle 906 result in the end portions 912 rotating within the engagement recesses 1010 without a corresponding rotation of the pivoting arms 206, which effectively locks the cable-actuated coupling system 200.

Conventional keyed locking systems for aircraft stowage bin 102 may be manually overridden and the bin unlatched via a manual release that is part of a conventional latch assembly 110. A member of the flight crew may reach beside the locked aircraft stowage bin 102 and press the manual release to bypass the keyed lock and release the bin. According to embodiments presented herein, these manual releases may also be used to release the aircraft stowage bin 102 when locked with the locking mechanism 308 described above. In practice, a flight crew member would open an aircraft stowage bin 102, place items to be secured within the bin, turn the lock activation knob to lock the bin, close the aircraft stowage bin 102, and later utilize the manual release to open the stowage bin.

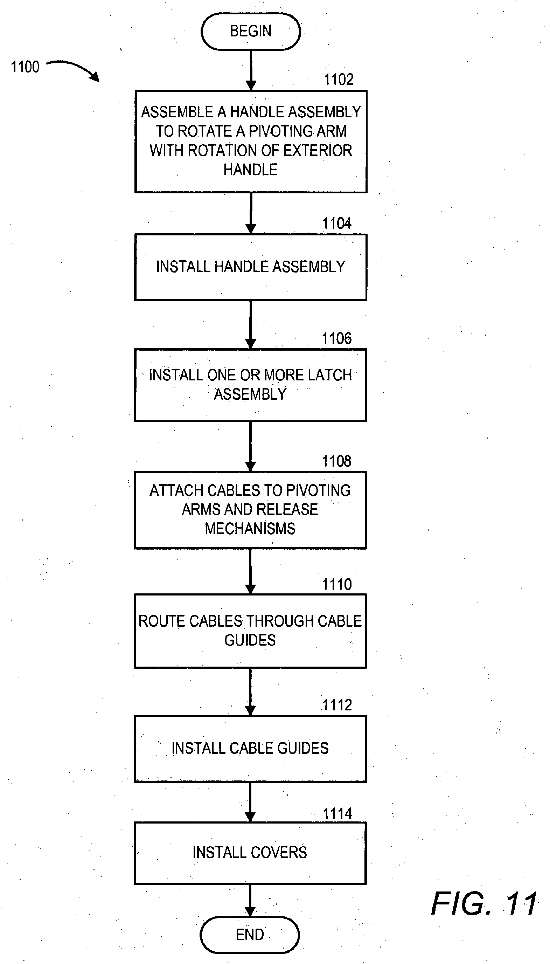

Turning now to FIG. 11, an illustrative routine 1100 for securing an aircraft stowage bin will now be described in detail. It should be appreciated that more or fewer operations may be performed than shown in the figures and described herein. These operations may also be performed in a different order than those described herein. The routine 1100 begins at operation 1102, where a handle assembly 204 is assembled. As described above, this assembly may include mechanically connecting one or more axles 906 to an external handle 202 such that rotation of the external handle 202 rotates the one or more axles 906. Pivoting arms 206 are secured to outer ends of the one or more axles 906.

If the aircraft stowage bin 102 is to be lockable, this operation may include connecting each pivoting arm 206 to the axle 906 via the springs 908 such that arm shaft 904 is inserted into the axle 906 and the outer end of the axle 906 is seated within the axle recess 1006 of the pivoting arm 206. This operation may further include configuring the locking mechanism 308 such that the slidable pins 404 and corresponding springs 702 are seated within the pin slots 502, and such that the lock activation knob or other lock activation mechanism 402 is installed onto the handle assembly 204.

From operation 1102, the routine 1100 continues to operation 1104, where the handle assembly is installed at the desired location within the aircraft stowage bin 102. At operation 1106, one or more latch assemblies 211 are installed. As discussed above, the concepts and technologies provided herein allow for the latch assemblies 211 to be installed at locations that offer the ideal mechanical advantage, rather than being limited to axial alignment with the handle assembly 204, as is required by conventional latching systems 100.

The routine 1100 continues from operation 1106 to operation 1108, where the cables 208 are attached at one end to the pivoting arms 206, while the opposing ends of the cables 208 are attached to the release mechanisms 212 of the latch assemblies 211. At operation 1110, the cables are routed through the cable guides 214. Any number of guides may be used depending on the routing of the cable within the aircraft stowage bin 102. These cable guides 214 are installed at operation 1112. As discussed above, advantageously, the cable guides 214 may be installed very close to the edges of the aircraft stowage bin 102, out of the way of-luggage and other items to be stored within the aircraft stowage bin 102. At operation 1114, cable covers 306 and/or a handle assembly cover 304 are installed over the cable-actuated coupling system 200 components to conceal and protect the components from damage, and the routine 1100 ends.

The subject matter described above is provided by way of illustration only and should not be construed as limiting. Various modifications and changes may be made to the subject matter described herein without following the example embodiments and applications illustrated and described, and without departing from the scope of the present disclosure, which is set forth in the following claims.

## Claims

1. An aircraft stowage bin (102) with a cable-actuated coupling mechanism for latching and releasing a stowage bin, comprising:
a handle assembly (104) comprising
an exterior handle configured to rotate for releasing the stowage bin, and
a pivoting arm mechanically connected to the exterior handle such that the pivoting arm pivots with rotation of the exterior handle;
a latch assembly (110) positioned on a surface of the stowage bin and configured to engage a fixed latch mechanism (213) when pressure is applied by the latch (213) assembly against the fixed latch mechanism, wherein the latch assembly comprises a release mechanism (212) configured to disengage the fixed latch mechanism (213) upon rotation of the release mechanism (212), and
a cable (208) connected at one end to the pivoting arm (206) of the handle assembly (104) and at an opposing end to the release mechanism (212) of the latch assembly (110) such that rotation of the exterior handle rotates the pivoting arm (206) and the release mechanism (212) via the cable (208) to disengage the fixed latch mechanism (213), further comprising a locking mechanism (308) configured to disengage the pivoting arm (206) such that rotation of the exterior handle does not rotate the pivoting arm (206), wherein the locking mechanism (308) comprises:
an axle connected to the exterior handle such that the axle rotates with rotation of the exterior handle, the axle comprising an outer end having an engagement portion configured to engage the pivoting arm;
the pivoting arm (206) connected to the axle via a spring such that the pivoting arm is biased inward toward the axle such that the pivoting arm (206) engages the engagement portion of the axle when the locking mechanism is configured in an unlocked configuration; and
a pin (404) slidably disposed within a slot (502) of the locking mechanism such that one end of the pin (404) abuts the pivoting arm (206) and an opposing end of the pin (404) abuts a lock activation projection,
wherein the lock activation projection is shaped such that activation of the locking mechanism causes the lock activation projection to push the pin (404) outward and push the pivoting arm (206) outward off of the engagement portion of the axle such that subsequent rotation of the exterior handle and axle does not rotate the pivoting arm (206).

2. The cable-actuated coupling mechanism of claim 1, wherein the handle assembly and the latch assembly are mounted such that an axis extending through the handle assembly and parallel to a front edge of the stowage bin does not intersect the latch assembly.

3. The cable-actuated coupling mechanism of claim 1, wherein the handle assembly further comprises a second pivoting arm mounted to an opposing side of the handle assembly from the pivoting arm, the cable-actuated coupling mechanism further comprising:
a second latch assembly positioned on a surface of the stowage bin opposite the surface on which the latch assembly is positioned, the second latch assembly configured to engage a second fixed latch mechanism when pressure is applied by the second latch assembly against the second fixed latch mechanism, wherein the latch assembly comprises a second release mechanism configured to disengage the second fixed latch mechanism upon rotation of the second release mechanism; and
a second cable connected at one end to the second pivoting arm of the handle assembly and at an opposing end to the second release mechanism of the second latch assembly such that rotation of the exterior handle rotates the second pivoting arm and the second release mechanism via the cable to disengage the second fixed latch mechanism.

4. The cable-actuated coupling mechanism of claim 1, further comprising a plurality of cable guides mounted proximate to one or more edges of the stowage bin, wherein the cable is routed from the pivoting arm, through the plurality of cable guides, to the release mechanism.

5. The cable-actuated coupling mechanism of claim 4, further comprising:
a handle assembly cover configured to cover and conceal the handle assembly and end portion of the cable connected to the pivoting arm on an interior of the stowage bin; and
a cable cover configured to abut the handle assembly cover and to conceal the cable and cable guides proximate to the one or more edges of the stowage bin.

6. The cable-actuated coupling mechanism of claim 1, wherein the latch assembly is positioned on an outer surface of the stowage bin such that the cable is routed through a side wall of the stowage bin and to the release mechanism of the latch assembly.

7. The cable-actuated coupling mechanism of claim 1, wherein the release mechanism comprises a spring-loaded pawl configured to engage a striker pin of the fixed latch mechanism such that the cable operates to rotate the spring-loaded pawl to a position that disengages the striker pin to release the stowage bin.

8. The cable-actuated coupling mechanism of claim 1, wherein the engagement portion of the axle comprises a non-circular cross-section, and wherein the outer end of the axle comprises an end portion having a circular cross-section that abuts the engagement portion, wherein the pivoting arm has a recessed portion having a non-circular cross-section corresponding to the non-circular cross-section of the engagement portion and is sized and shaped to receive the end portion and the engagement portion of the axle when engaged with the axle.

9. The cable-actuated coupling mechanism of claim 1, wherein the stowage bin is used on an aircraft.

10. A method for securing an aircraft stowage bin, comprising:
assembling a handle assembly to rotate a pivoting arm with rotation of an exterior handle;
installing the handle assembly within the stowage bin such that the exterior handle is accessible from an exterior of the stowage bin, while a substantial portion of the handle assembly protrudes within an interior of the stowage bin;
installing a latch assembly on an exterior surface of the stowage bin;
attaching a first end of a cable to the pivoting arm of the handle assembly and a second end of the cable to a release mechanism of the latch assembly;
routing the cable through a plurality of cable guides; and
installing the plurality of cable guides adjacent to an edge of the stowage bin; wherein assembling the handle assembly to rotate the pivoting arm with rotation of the exterior handle comprises:
connecting an axle to the exterior handle such that axle rotates with the exterior handle; and
connecting the pivoting arm to an end of the axle such that the pivoting arm is slidably releasable from the end of the axle such that the pivoting arm slides outward to disengage from the axle and inward to engage the axle; the method further comprising:
installing a slidable pin within the handle assembly such that one end of the slidable end abuts the pivoting arm; and
installing a lock activation projection against an opposing end of the slidable pin, wherein the lock activation projection is shaped such that activation of the locking mechanism causes the lock activation projection to push the slidable pin outward and push the pivoting arm outward off of an engagement portion of the end of the axle such that subsequent rotation of the exterior handle and axle does not rotate the pivoting arm.

11. The method of claim 10, wherein installing the latch assembly to an exterior surface of the stowage bin comprises installing the latch assembly at a location on the exterior surface that is not axially aligned with the handle assembly.

12. The method of claim 10, wherein routing the cable through a plurality of cable guides comprises routing the cable through the plurality of cable guides and through an exterior surface of the stowage bin.

13. The method of claim 10, wherein installing the plurality of cable guides adjacent to an edge of the stowage bin comprises installing the plurality of cable guides such that the cable is routed from the handle assembly forward to a front edge of the stowage bin, turning to follow the front edge of the stowage bin to a side of the stowage bin, through the side of the stowage bin, and turning rearward to the release mechanism of the latch assembly.

14. The method of claim 10, further comprising:
installing a cable cover over portions of the cable exposed to an inside space of the stowage bin; and
installing a handle assembly cover over the handle assembly within the inside space of the stowage bin.

## Patentansprüche

1. Staubehälter eines Luftfahrzeugs (102) mit einem Kabelbetätigten Kopplungsmechanismus zum Verriegeln und Freigeben eines Staubehälters, welcher Folgendes aufweist:
eine Griffeinheit (104), welche Folgendes aufweist
einen Außengriff, welcher drehbar gestaltet ist, um den Staubehälter freizugeben, und
einen Schwenkarm, welcher mechanisch mit dem Außengriff verbundenen ist, so dass der Schwenkarm bei Drehung des Außengriffs schwenkt;
eine Verriegelungseinheit (110), welche auf einer Fläche des Staubehälters angeordnet und gestaltet ist, um einen festen Verriegelungsmechanismus (213) einzurasten, wenn durch die Verriegelungs (210)-Einheit Druck gegen den festen Verriegelungsmechanismus aufgebracht wird, wobei die Verriegelungseinheit einen Freigabemechanismus (212) aufweist, der so gestaltet ist, dass der feste Verriegelungsmechanismus (213) durch Drehung des Freigabemechanismus (212) ausrastet und
ein Kabel (208), das an einem Ende an dem Schwenkarm (206) der Griffeinheit (104) und an einem entgegengesetzten Ende an dem Freigabemechanismus (212) der Verriegelungseinheit (110) angeschlossen ist, so dass die Drehung des Außengriffs den Schwenkarm (206) und über das Kabel (208) den
Freigabemechanismus (212) dreht, um den festen Verriegelungsmechanismus (213) auszurasten; welcher außerdem einen Sperrmechanismus (308) aufweist, der gestaltet ist, um den Schwenkarm (206) auszurasten, so dass die Drehung des Außengriffs den Schwenkarm (206) nicht dreht,
wobei der Sperrmechanismus (308) Folgendes aufweist:
eine Achse, die so mit dem Außengriff verbunden ist, dass die Achse sich mit Drehung des Außengriffs dreht, wobei die Achse ein äußeres Ende aufweist, welches einen Einrastabschnitt hat, der so gestaltet ist, dass er den Schwenkarm einrastet;
den Schwenkarm (206), der mit der Achse so über eine Feder verbunden ist, dass der Schwenkarm nach innen in Richtung der Achse vorgespannt ist, so dass der Schwenkarm (206) in den Einrastabschnitt der Achse einrastet, wenn der Sperrmechanismus in einer entsperrten Anordnung gestaltet ist; und
einen Bolzen (404), der verschiebbar in einem Schlitz (502) des Sperrmechanismus angeordnet ist, so dass ein Ende des Bolzens (404) an den Schwenkarm (206) angrenzt und ein entgegengesetztes Ende des Bolzens (404) an einen Sperrauslöseansatz angrenzt,
wobei der Sperrauslöseansatz so gestaltet ist, dass das Auslösen des Sperrmechanismus bewirkt, dass der Sperrauslöseansatz den Bolzen (404) nach außen schiebt und den Schwenkarm (206) nach außen weg aus dem Einrastabschnitt der Achse schiebt, so dass die nachfolgende Drehung des Außengriffs und der Achse den Schwenkarm (206) nicht dreht.

2. Kabel-betätigter Kopplungsmechanismus nach Anspruch 1, wobei die Griffeinheit und die Verriegelungseinheit so befestigt sind, dass eine Achse, die durch die Griffeinheit und parallel zu einer Vorderkante des Staubehälters verläuft, die Verriegelungseinheit nicht schneidet.

3. Kabel-betätigter Kopplungsmechanismus nach Anspruch 1, wobei die Griffeinheit außerdem einen zweiten Schwenkarm aufweist, der an einer dem Schwenkarm gegenüberliegenden Seite der Griffeinheit befestigt ist, wobei der Kabel-betätigte Kopplungsmechanismus außerdem Folgendes aufweist:
eine zweite Verriegelungseinheit, die auf einer Fläche des Staubehälters gegenüber der Fläche, auf welcher die Verriegelungseinheit angeordnet ist, angeordnet ist, wobei die zweite Verriegelungseinheit so gestaltet ist, dass sie einen zweiten festen Verriegelungsmechanismus einrastet, wenn durch die zweite Verriegelungseinheit Druck gegen den zweiten festen Verriegelungsmechanismus aufgebracht wird, wobei die Verriegelungseinheit einen zweiten Freigabemechanismus aufweist, der so gestaltet ist, dass der zweite feste Verriegelungsmechanismus bei Drehung des zweiten Freigabemechanismus ausrastet; und
ein zweites Kabel, das an einem Ende an dem zweiten Schwenkarm der Griffeinheit und an einem entgegengesetzten Ende an dem zweiten Freigabemechanismus der zweiten Verriegelungseinheit angeschlossen ist, so dass die Drehung des Außengriffs den zweiten Schwenkarm und über das Kabel den zweiten Freigabemechanismus dreht, um den zweiten festen Verriegelungsmechanismus auszurasten.

4. Kabel-betätigter Kopplungsmechanismus nach Anspruch 1, welcher außerdem mehrere in der Nähe einer oder mehreren Kanten des Staubehälters befestigte Kabelführungen aufweist, wobei das Kabel von dem Schwenkarm durch die mehreren Kabelführungen zum Freigabemechanismus geführt wird.

5. Kabel-betätigter Kopplungsmechanismus nach Anspruch 4, welcher außerdem Folgendes aufweist:
eine Griffeinheitsabdeckung, die so gestaltet ist, dass sie die Griffeinheit und den Endabschnitt des mit dem Schwenkarm verbundenen Kabels in einem Innenraum des Staubehälters abdeckt und verbirgt; und
eine Kabelabdeckung, die so gestaltet ist, dass sie an die Griffeinheitsabdeckung angrenzt und das Kabel und die Kabelführungen in der Nähe der einen oder mehreren Kanten des Staubehälters verbirgt.

6. Kabel-betätigter Kopplungsmechanismus nach Anspruch 1, wobei die Verriegelungseinheit auf einer äußeren Oberfläche des Stauraums angeordnet ist, so dass das Kabel durch eine Seitenwand des Staubehälters und zum Freigabemechanismus der Verriegelungseinheit geführt wird.

7. Kabel-betätigter Kopplungsmechanismus nach Anspruch 1, wobei der Freigabemechanismus eine federbelastete Sperrklinke aufweist, die so gestaltet ist, dass sie einen Schließbolzen des festen Verriegelungsmechanismus einrastet, so dass das Kabel zum Drehen der federbelasteten Sperrklinke in eine Position, in welcher der Verriegelungsbolzen ausrastet, um den Staubehälter freizugeben, arbeitet.

8. Kabel-betätigter Kopplungsmechanismus nach Anspruch 1, wobei der Einrastabschnitt der Achse einen nicht kreisförmigen Querschnitt aufweist und wobei das äußere Ende der Achse einen Endabschnitt mit einem kreisförmigen Querschnitt aufweist, der an den Einrastabschnitt angrenzt, wobei der Schwenkarm einen eingelassenen Abschnitt mit einem nicht kreisförmigen Querschnitt, der dem nicht kreisförmigem Querschnitt des Einrastabschnitts entspricht, hat und so bemessen und geformt ist, um den Endabschnitt und den Einrastabschnitt der Achse aufzunehmen, wenn er mit der Achse einrastet.

9. Kabel-betätigter Kopplungsmechanismus nach Anspruch 1, wobei der Staubehälter in einem Luftfahrzeug verwendet wird.

10. Ein Verfahren zur Befestigung eines Staubehälters eines Luftfahrzeugs, welches Folgendes aufweist:
Montieren einer Griffeinheit, um einen Schwenkarm durch Drehung eines Außengriffs zu drehen;
Installieren der Griffeinheit innerhalb des Staubehälters, so dass der Außengriff von einer Außenseite des Staubehälters zugänglich ist, während ein wesentlicher Abschnitt der Griffeinheit in einem Innenraum des Staubehälters vorsteht;
Installieren einer Verriegelungseinheit an einer Außenfläche des Staubehälters;
Anbringen eines ersten Kabelendes an den Schwenkarm der Griffeinheit und eines zweiten Kabelendes an einen Freigabemechanismus der Verriegelungseinheit;
Führen des Kabels durch mehrere Kabelführungen; und
Installieren der mehreren einer Kante des Staubehälters benachbarten Kabelführungen; wobei ein Aufbauen der Griffeinheit zum Drehen des Schwenkarms durch Drehung des Außengriffs Folgendes aufweist:
Anschließen einer Achse an den Außengriff, so dass die Achse sich mit dem Außengriff dreht; und
Anschließen des Schwenkarms an ein Achsenende, so dass der Schwenkarm verschiebbar vom Achsenende lösbar ist, so dass der Schwenkarm sich nach außen schiebt, um von der Achse auszurasten, und nach innen, um mit der Achse einzurasten; wobei das Verfahren außerdem Folgendes aufweist:
Installieren eines verschiebbaren Bolzens innerhalb der Griffeinheit, so dass ein Ende des verschiebbaren Endes an den Schwenkarm angrenzt; und
Installieren eines Sperrauslöseansatzes an ein gegenüber liegendes Ende des verschiebbaren Bolzens, wobei der Sperrauslöseansatz so geformt ist, dass das Auslösen des Sperrmechanismus bewirkt, dass der Sperrauslöseansatz den verschiebbaren Bolzen nach außen schiebt und den Schwenkarm nach außen weg aus dem Einrastabschnitt des Achsenendes schiebt, so dass eine nachfolgende Drehung des Außengriffs und der Achse den Schwenkarm nicht dreht.

11. Verfahren nach Anspruch 10, wobei ein Installieren der Verriegelungseinheit an eine Außenfläche des Staubehälters ein Installieren der Verriegelungseinheit an eine Position auf der Außenfläche, welche nicht axial zu der Griffeinheit ausgerichtet ist, aufweist.

12. Verfahren nach Anspruch 10, wobei ein Führen des Kabels durch mehrere Kabelführungen das Führen des Kabels durch mehrere Kabelführungen und durch eine Außenfläche des Staubehälters aufweist.

13. Verfahren nach Anspruch 10, wobei ein Installieren der mehreren einer Kante des Staubehälters benachbarten Kabelführungen das Installieren mehrerer Kabelführungen aufweist, so dass das Kabel von der Griffeinheit nach vorn zu einer Vorderkante des Staubehälters geführt wird, abbiegt, um der Vorderkante des Staubehälters an eine Seite des Staubehälters durch die Seite des Staubehälters zu folgen und nach hinten zum Freigabemechanismus der Verriegelungseinheit abbiegt.

14. Verfahren nach Anspruch 10, welches außerdem Folgendes aufweist:
Installieren einer Kabelabdeckung über Abschnitte des Kabels, die in einem Innenraum des Staubehälters freiliegen; und
Installieren einer Griffeinheitsabdeckung über die Griffeinheit innerhalb des Innenraums des Staubehälters.

## Revendications

1. Compartiment à bagages (102) pour avion, pourvu d'un mécanisme d'accouplement actionné par câble pour loqueter et libérer un compartiment à bagages, comprenant :
un ensemble de poignée (104) comprenant
une poignée extérieure configurée pour tourner afin de libérer le compartiment à bagages, et
un bras pivotant relié mécaniquement à la poignée extérieure de sorte que le bras pivotant pivote conjointement avec la rotation de la poignée extérieure ;
un ensemble formant loquet (110) positionné sur une surface du compartiment à bagages et configuré pour engager un mécanisme à loquet fixe (213) lorsque la pression est appliquée par l'ensemble formant loquet (110) contre le mécanisme à loquet fixe, l'ensemble formant loquet comprenant un mécanisme de libération (212) configuré pour désengager le mécanisme à loquet fixe (213) lors de la rotation du mécanisme de libération (212) ; et
un câble (208) relié, à une extrémité, au bras pivotant (206) de l'ensemble formant poignée (104) et, à une extrémité opposée, au mécanisme de libération (212) de l'ensemble formant loquet de telle sorte que la rotation de la poignée extérieure fasse tourner le bras pivotant (206) et le mécanisme de libération par le biais du câble pour désengager le mécanisme à loquet fixe (213) ; comprenant en outre un mécanisme de verrouillage (308) configuré pour désengager le bras pivotant (206) de telle sorte que la rotation de la poignée extérieure ne fasse pas tourner le bras pivotant (206) ; le mécanisme de verrouillage (308) comprenant :
un axe relié à la poignée extérieure de telle sorte que l'axe tourne conjointement avec la rotation de la poignée extérieure, l'axe comprenant une extrémité extérieure pourvue d'une partie d'engagement configurée pour s'engager avec le bras pivotant ;
le bras pivotant 206) relié à l'axe par le biais d'un ressort de façon à pousser le bras pivotant vers l'intérieur en direction de l'axe de telle sorte que le bras pivotant (206) s'engage avec la partie d'engagement de l'axe lorsque le mécanisme de verrouillage est configuré dans une configuration déverrouillée ; et
une broche (404) disposée de manière coulissante dans une fente (502) du mécanisme de verrouillage de sorte qu'une extrémité de la broche (404) vient buter contre le bras pivotant (206) et une extrémité opposée de la broche (404) vient buter contre une saillie d'activation de verrouillage,
la saillie d'activation de verrouillage étant configurée de telle sorte que l'activation du mécanisme de verrouillage amène la saillie d'activation de verrouillage à pousser la broche (404) vers l'extérieur et à pousser le bras pivotant (206) vers l'extérieur hors de la partie d'engagement de l'axe de sorte que la poursuite de la rotation de la poignée extérieure et de l'axe ne fasse pas tourner le bras pivotant (206).

2. Mécanisme d'accouplement actionné par câble selon la revendication 1, dans lequel l'ensemble formant poignée et l'ensemble formant loquet sont montés de telle sorte qu'un axe s'étendant à travers l'ensemble formant poignée et parallèlement à un bord avant du compartiment à bagages ne coupe pas l'ensemble formant loquet.

3. Mécanisme d'accouplement actionné par câble selon la revendication 1, dans lequel l'ensemble formant poignée comprend en outre un second bras pivotant monté sur un côté opposé de l'ensemble formant poignée par rapport au bras pivotant, le mécanisme d'accouplement actionné par câble comprenant en outre :
un second ensemble formant loquet positionné sur une surface du compartiment à bagages opposée à la surface sur laquelle l'ensemble formant loquet est positionné, le second ensemble formant loquet étant configuré pour engager un second mécanisme à loquet fixe lorsque la pression est appliquée par le second ensemble formant loquet contre le second mécanisme à loquet fixe, l'ensemble formant loquet comprenant un second mécanisme de libération configuré pour désengager le second mécanisme à loquet fixe lors de la rotation du second mécanisme de libération ; et
un second câble relié, à une extrémité, au second bras pivotant de l'ensemble formant poignée et, à une extrémité opposée, au second mécanisme de libération du second ensemble formant loquet de sorte que la rotation de la poignée extérieure entraîne la rotation du second bras pivotant et du second mécanisme de libération par le biais du câble pour désengager le second mécanisme à loquet fixe.

4. Mécanisme d'accouplement actionné par câble selon la revendication 1, comprenant en outre une pluralité de guides de câble montés à proximité d'un ou de plusieurs bords du compartiment à bagages, le câble étant passé du bras pivotant au mécanisme de libération via la pluralité de guides de câble.

5. Mécanisme d'accouplement actionné par câble selon la revendication 4, comprenant en outre :
un capot pour ensemble formant poignée, configuré pour recouvrir et masquer l'ensemble formant poignée et la partie d'extrémité du câble reliée au bras pivotant sur un intérieur du compartiment à bagages ; et
un capot pour câble, configuré pour venir buter contre le capot pour ensemble formant poignée et pour masquer le câble et les guides de câble à proximité du ou des bords du compartiments à bagages.

6. Mécanisme d'accouplement actionné par câble selon la revendication 1, dans lequel l'ensemble formant loquet est positionné sur une surface extérieure du compartiment à bagages de façon à faire passer le câble à travers une paroi latérale du compartiment à bagages jusqu'au mécanisme de libération de l'ensemble formant loquet.

7. Mécanisme d'accouplement actionné par câble selon la revendication 1, dans lequel le mécanisme de libération comprend un cliquet à ressort configuré pour s'engager avec une goupille de percuteur du mécanisme à loquet fixe de telle sorte que le câble fasse tourner le cliquet à ressort dans une position de désengagement de la goupille afin de libérer le compartiment à bagages.

8. Mécanisme d'accouplement actionné par câble selon la revendication 1, dans lequel la partie d'engagement de l'axe a une section transversale non circulaire, et dans lequel l'extrémité extérieure de l'axe comprend une partie d'extrémité ayant une section transversale circulaire qui vient buter contre la partie d'engagement, le bras pivotant comportant une partie évidée, ayant une section transversale non-circulaire correspondant à la section transversale non-circulaire de la partie d'engagement, et étant dimensionnée et conformée pour recevoir la partie d'extrémité et la partie d'engagement de l'axe lorsqu'il est engagé avec l'axe.

9. Mécanisme d'accouplement actionné par câble selon la revendication 1, dans lequel le compartiment à bagages est utilisé dans un avion.

10. Procédé de fixation d'un compartiment à bagages, comprenant les étapes consistant à :
assembler un ensemble formant poignée pour faire tourner un bras pivotant conjointement avec la rotation d'une poignée extérieure ;
placer l'ensemble formant poignée à l'intérieur du compartiment à bagages de telle sorte que la poignée extérieure soit accessible depuis l'extérieur du compartiment à bagages, tandis qu'une partie importante de 1"ensemble formant poignée fait saillie à l'intérieur du compartiment à bagages ;
placer un ensemble formant loquet sur une surface extérieure du compartiment à bagages ;
attacher une première extrémité d'un câble au bras pivotant de l'ensemble formant poignée et une seconde extrémité du câble à un mécanisme de libération de l'ensemble formant loquet ;
faire passer le câble par une pluralité de guides de câble ; et
placer la pluralité de guides de câble de façon adjacente à un bord du compartiment à bagages ; l'étape d'assemblage de l'ensemble formant poignée pour faire tourner le bras pivotant conjointement à la rotation de la poignée extérieure comprenant les étapes consistant à :
relier un axe à la poignée extérieure de telle sorte que l'axe tourne conjointement avec la poignée extérieure ; et
relier le bras pivotant à une extrémité de l'axe de telle sorte que le bras pivotant puisse être libéré de manière coulissante de l'extrémité de l'axe de sorte que le bras pivotant glisse vers l'extérieur pour se dégager de l'axe et vers l'intérieur pour s'engager avec l'axe ; le procédé comprenant en outre les étapes consistant à :
placer une broche coulissante à l'intérieur l'ensemble formant poignée de sorte qu'une extrémité de l'extrémité coulissante vienne buter contre le bras pivotant ; et
placer une saillie d'activation de loquet contre une extrémité opposée de la broche coulissante, la saillie d'activation de loquet étant configurée de telle sorte que l'activation du mécanisme de verrouillage amène la saillie d'activation de verrouillage à pousser la broche coulissante vers l'extérieur et à pousser le bras pivotant vers l'extérieur hors d'une partie d'engagement de l'extrémité de l'axe de sorte que la poursuite de la rotation de la poignée extérieurs et de l'axe ne fasse pas tourner le bras pivotant.

11. Procédé selon la revendication 10, dans lequel l'étape de placement de l'ensemble formant loquet sur une surface extérieure du compartiment à bagages comprend l'étape de placement de l'ensemble formant loquet à un emplacement sur la surface extérieure qui n'est pas axialement aligné avec l'ensemble formant poignée.

12. Procédé selon la revendication 10, dans lequel l'étape d'acheminement du câble à travers une pluralité de guides de câble comprend l'étape d'acheminement du câble à travers la pluralité de guides de câble et à travers une surface extérieure du compartiment à bagages.

13. Procédé selon la revendication 10, dans lequel l'étape de placement de la pluralité de guides de câble de façon adjacente à un bord du compartiment à bagages comprend l'étape consistant à placer la pluralité de guides de câble de telle sorte le câble soit acheminé de l'ensemble formant poignée vers l'avant jusqu'à un bord avant du compartiment à bagages, à tourner pour suivre le bord avant du compartiment à bagages vers un côté du compartiment à bagages, à passer à travers le côté du compartiment à bagages, et à tourner vers l'arrière en direction du mécanisme de libération de l'ensemble formant loquet.

14. Procédé selon la revendication 10, comprenant en outre les étapes consistant à :
placer un capot pour câble sur des parties du câble exposées à un espace intérieur du compartiment à bagages ; et
placer un capot pour ensemble formant poignée sur l'ensemble formant poignée dans l'espace intérieur du compartiment à bagages.
